# EUROPÄISCHE PATENTSCHRIFT

(11) **EP 1 938 690 B1**
(45) Veröffentlichungstag und Bekanntmachung des Hinweises auf die Patenterteilung: **23.10.2013**
(21) Anmeldenummer: 06405542.9
(22) Anmeldetag: 22.12.2006
(51) Int. Cl.: A01N 59/16, A01N 25/10, C02F 1/00, C02F 1/50, C02F 1/68, C10M 175/00, C10M 175/04

(54) **Sterilisierung und Konservierung von Fluiden**
Sterilising and preserving fluids
Stérilisation et conservation de fluides

(43) Veröffentlichungstag der Anmeldung: 02.07.2008
(73) Patentinhaber: Preentec AG, 1704 Fribourg (CH); Bucher AG Langenthal, 4900 Langenthal (CH)
(72) Erfinder: Gehri, Martin Christian Adrian, 3257 Grossaffoltern (CH); Keller, Bernhard, 3045 Meikirch (CH); Regenass, Peter, 4900 Langenthal (CH)
(74) Vertreter: Rüfenacht, Philipp Michael

(56) Entgegenhaltungen:
- EP-A- 1 462 416
- EP-A1- 0 253 132
- EP-A1- 0 727 427
- WO-A-03/064330
- US-A- 2 595 290
- US-A- 4 198 296

## Beschreibung

### Technisches Gebiet

Die Erfindung betrifft Erzeugnisse, enthaltend ein Feststoff-Biozid und ein Kompositmaterial als Kombinationspräparat zur gleichzeitigen, getrennten oder zeitlich abgestuften Anwendung bei einer Sterilisierung und langfristigen Konservierung eines zu reinigenden Fluids, wobei das Kompositmaterial zur Absorption von Verunreinigungen geeignet ist und ein Substrat und eingelagerte und/oder gebundene Metalle oder Metallverbindungen als Wirkstoffe umfasst. Des Weiteren bezieht sich die Erfindung auf ein Verfahren zur Reinigung eines Fluids mit den Erzeugnissen.

### Stand der Technik

Fluide, wie Wasser, Treibstoffe, Kühlflüssigkeiten, Schmiermittel, Motorenöle, aber auch physiologische Flüssigkeiten sind je nach Umwelteinflüssen den unterschiedlichsten Mikroorganismen ausgesetzt. Zur Aufrechterhaltung der gewünschten Fluidfunktion müssen insbesondere diejenigen Fluide, welche langzeitig verwendet werden (z. B. Kühlflüssigkeiten oder Schmieröle in technischen Apparaturen), durch Zugabe von Sterilisations- und/oder Konservierungsmittel vor Bakterien- und Pilzbefall geschützt werden.

Bei der Verwendung von flüssigen Sterilisations- oder Konservierungsmitteln wird zwar der Befall durch Mikroorganismen verhindert, gleichzeitig können aber auch die erwünschten Eigenschaften der Fluide beeinträchtigt werden. Bei der Bereitstellung von Bade- oder Trinkwasser beispielsweise kommt hinzu, dass nur toxikologisch unbedenkliche Biozide als Sterilisations- oder Konservierungsmittel verwendet werden können, da Lebewesen in direkten Kontakt mit den Fluid kommen oder dieses gar einnehmen.

Verwendet man jedoch Biozide in fester Form, werden die vorstehend genannten Probleme umgangen. Die Biozide lassen sich dabei in einfacher Weise, z. B. durch Filterung, in einem Fluidtank zurückbehalten oder sie werden direkt in ein Filtersystem integriert.

Die US 2003/0140785 beschreibt ein Filtermedium mit einer antibakteriellen Wirkung, umfassend ein polymerisches aktives Granulat, welches in einen Träger eingebunden ist. Die aktiven Teilchen haben einen Durchmesser von 0,1-5000 µm (Mikrometer). Als aktiver Wirkstoff kommt entweder metallisches oder komplexgebundenes Silber zum Einsatz. Das Silber wird bei der Verwendung nicht an die Umgebung abgegeben und wirkt daher katalytisch. Das Polymer umfasst ein querverlinktes Polyacrylamid sowie ein darin verankertes Sorptionsmittel. Das Filtermedium ist zur Sterilisierung von Flüssigkeiten geeignet, insbesondere auch für die Sterilisierung von Wasser oder industriellen Flüssigkeiten.

Die US 5,792,793 beschreibt einen antibakteriellen Wirkstoff, welcher auf einer Vielzahl von Trägern zum Einsatz kommen kann. Die biozide Wirkung des Wirkstoffs ergibt sich durch in Thiol-Komplexen gebundene Silberionen. Als Träger kommen feste Teilchen oder Flüssigkeiten in Frage. Als Material für feste Träger kommen dabei verschiedene Polymere und Kunstharze zum Einsatz, insbesondere acrylische Kunstharze. Die Teilchen haben einen Durchmesser zwischen 10 µm (Mikrometer) und 10 mm. Das Silber bleibt in den Komplexen gebunden, wobei die Komplexe am Träger verankert sind. Der an einen Träger gebundene antibakterielle Wirkstoff kann in Tanks und zur Wasseraufbereitung zum Einsatz kommen, aber auch in medizinischen Bereichen. Die Trägerteilchen können dabei frei in den Tank mit der zu behandelnden Flüssigkeit eingebracht werden.

Die EP 0 253 132 A1 (Busch) beschreibt einen Filter zum Reinigen von Leitungswasser, insbesondere für einen Haushalts-Wasserleitungsanschluss, welcher eine hohe Standzeit aufweist. Der Filter umfasst zwei hintereinander eingesetzte Filtereinsätze, nämlich zunächst einen Adsorptionsfiltereinsatz und anschliessend einen Bakterienfiltereinsatz. Sowohl der Adsorptionsfiltereinsatz als auch der Bakterienfiltereinsatz enthalten ein Adsorptionsmittel, nämlich Aktivkohle, und ein oligodynamisches Mittel, nämlich Silberkörner. Beim Adsorptionsfiltereinsatz werden fein verteilte Aktivkohleteilchen von thermoplastischen Kunststoff-Bindemittel Teilchen zusammengehalten. Die Silberkörner sind in diesen Teilchenverbund eingelagert. Der Bakterienfilter weist einen Aktivkohle-Pressblock auf mit einer sehr feinen Porosität mit eingelagertem metallischem Silberpulver,

Die US 2,595,290 (Quinn Products) beschreibt Prozesse und Vorrichtungen zur Wasseraufbereitung. Es werden zwei Schritte zur Reinigung des Wassers beschrieben, nämlich eine mechanische Filtration und eine kombinierte adsorptive und chemische Behandlung des Wassers. Im zweiten Schritt der adsorptiven und chemischen Behandlung wird das Wasser durch ein Granulat geleitet. Das Granulat enthält dabei einen ersten Typ eines adsorptiven Granulats, einen zweiten Typ eines Ionenaustausch Granulats und einen dritten Typ eines mit einem Bakterizid überzogenen Granulats sehr niedriger Wasserlöslichkeit. Das adsorptive Granulat besteht aus Aktivkohle oder Silica-Gel. Einige der Granulatteilchen, welche zum dritten Typ des Granulats gehören, bestehen ebenfalls aus Aktivkohlegranulat oder entsprechendem silikatischem Material, welches mit Silberchlorid oder Silbersulfid als Bakterizid überzogen ist.

Die EP 1 426 416 A2 (Akechi Ceramics) bezieht sich auf eine Vorrichtung zur antibakteriellen Behandlung von Flüssigkeiten und zur Eliminierung von Verunreinigungen in Flüssigkeiten. Es wird ein Apparat mit drei Filterlagen, nämlich einer mechanischen Filterlage, einer adsorptiven Filterlage und einer antibakteriellen Filterlage beschrieben. Die mechanische Filterlage filtert Partikel heraus, welche grösser als 10 µm sind. Die anschliessende adsorptive Filterlage enthält Aktivkohlepartikel mit einer durchschnittlichen Korngrösse von 3 mm, welche organische Substanzen und Bakterien mit hoher Effizienz adsorbieren und dadurch unschädlich machen. Die antibakterielle Filterlage schliesslich enthält ein Aluminiumoxid-Pulver, welches von Natriumborosilikat zusammen mit aufgestreutem Silber als antibakteriellem Wirkstoff ummantelt ist und eine durchschnittliche Korngrösse von 0.5 mm aufweist. Das Pulver wird während zwei Stunden auf 750 °C gehalten.

Es hat sich jedoch gezeigt, dass, abhängig von der Zusammensetzung des Fluids, die bioziden Eigenschaften von oberflächenaktiven Feststoff-Bioziden trotz eines katalytischen Wirkmechanismus schon nach kurzer Zeit stark abnehmen oder sogar vollständig unterbunden werden. Um eine sterilisierende und konservierende Wirkung aufrecht zu erhalten muss daher zusätzliches Biozid zum Fluid gegeben werden. Dieses Verfahren ist jedoch umweltbelastend und teuer, da unnötigerweise sehr viel Konservierungsmittel eingesetzt wird, welches nach kurzer Zeit seine Wirkung verliert.

Es besteht daher nach wie vor Bedarf an einem Verfahren zum Sterilisieren und langfristigen Konservieren eines Fluids und an entsprechender Sterilisations- und Konservierungsmittel, welche die vorstehend erwähnten Nachteile nicht aufweisen.

### Darstellung der Erfindung

Aufgabe der Erfindung ist es, dem eingangs genannten technischen Gebiet zugehörende Erzeugnisse sowie ein entsprechendes Verfahren zu schaffen, welche eine umwelttoxikologisch unbedenkliche Sterilisierung und langfristige Konservierung eines Fluids ermöglichen, dabei von den Verschmutzungsarten weitgehend unabhängige, erhöhte Standzeiten haben und zudem den Verbrauch an Sterilisations- und Konservierungsmittel minimieren.

Die Lösung der Aufgabe ist durch die Merkmale der Ansprüche 1 und 16 definiert. Gemäss der Erfindung werden zur gleichzeitigen, getrennten oder zeitlich abgestuften Anwendung bei einer Sterilisierung und langfristigen Konservierung von zu reinigenden Fluiden Erzeugnisse verwendet, welche eine Kombination eines Feststoff-Biozids und eines Kompositmaterials sind. Dabei ist das Kompositmaterial zur Absorption von Verunreinigungen geeignet. Es umfasst ein Substrat, welches als Hydrogel ausgebildet ist, und eingelagerte und/oder gebundene Metalle oder Metallverbindungen als Wirkstoffe. Das Kompositmaterial ist zur Freisetzung von Wirkstoffen ausgebildet. Diese Wirkstoffe reduzieren die Verunreinigungen und/oder sterilisieren das Fluid.

Gegenüber dem Stand der Technik bieten die erfindungsgemässen Erzeugnisse und das vorliegende Verfahren mehrere Vorteile. So wird durch die Entfernung von Verunreinigungen aus dem Fluid mit dem Kompositmaterial sichergestellt, dass das Feststoff-Biozid nicht durch Verunreinigungen kontaminiert wird und dadurch seine biozide Aktivität neutralisiert wird.

Da es sich bei den verwendeten Sterilisations- bzw. Konservierungsmitteln um Feststoffe handelt, lassen sich diese in einfacher Weise abfiltrieren. Bei der Sterilisierung und Konservierung von Fluiden, die in einem Fluidkreislauf eingesetzt werden (z. B. in einem Kühlmittelkreislauf, in einem Schmiermittelkreislauf oder bei der Aufbereitung von Trink- und Badewasser) ist es von Vorteil, wenn die Sterilisations- bzw. Konservierungsmittel z. B. nur in einem Ausgleichsgefäss oder einem Tank vorliegen. Damit wird einerseits erreicht, dass Personen, welche mit dem Fluid in Kontakt kommen, nicht mit den bioziden und allenfalls giftigen Substanzen zur Sterilisierung und Konservierung in Berührung kommen. Andererseits ist sichergestellt, dass die eigentliche Funktion des Fluids, z. B. die Schmierung einer Maschine, nicht durch darin gelöste, emulgierte oder suspendierte Sterilisations- bzw. Konservierungsmittel beeinträchtigt wird.

Durch das erfindungsgemässe Verfahren wird eine bestmögliche toxikologische Entlastung der Umwelt erreicht, da die benötigten Mengen an Sterilisations- bzw. Konservierungsmittel minimiert werden.

Bevorzugt wird als Feststoff-Biozid in den Erzeugnissen eine Substanz oder ein Substanzgemisch verwendet, welche/welches beim Kontakt, insbesondere beim Oberflächenkontakt, mit Mikroorganismen aufgrund eines katalytischen Mechanismus eine keimtötende Wirkung auf die Mikroorganismen erzeugt. Damit ist eine lang anhaltende Wirkung des Feststoff-Biozids gewährleistet, da es bei der Verwendung nicht verbraucht wird. Insbesondere beim Kontakt des Feststoff-Biozids mit Bakterien und/oder Pilzen tritt eine bakterizide und/oder fungizide Wirkung auf. Diese kann beispielsweise durch einen oligodyamischen Effekt hervorgerufen werden, welcher auf der schädigenden Wirkung von Metallkationen auf lebende Zellen beruht. Insbesondere Kationen von z. B. Hg, Ag, Cu, Sn, Fe oder Pb zeigen diesen Effekt. Insbesondere bei Motorenölen, Schmiermitteln, Kühlemulsionen oder im Medizinalbereich ist es wichtig, den häufig auftretenden Bakterien- und Pilzbefall konsequent zu verhindern.

Alternativ kann auch ein Feststoff-Biozid verwendet werden, welches die Mikroorganismen durch Absorption aus dem Fluid entfernt und im Innern des Biozids durch Abgabe von Wirkstoffen abtötet. Dieser Wirkmechanismus hat den Vorteil, dass das Fluid vor inaktivem Biomaterial geschützt wird.

Bei einer Zugabe des Kompositmaterials zum Fluid wird wenigstens ein Teil der im Kompositmaterial enthaltenen Wirkstoffe an das Fluid abgegeben und gleichzeitig werden Verunreinigungen aus dem Fluid im Bereich der Oberfläche oder im Innern des Kompositmaterials absorbiert. Diese doppelte Funktion des Kompositmaterials führt zu einer effizienten Eliminierung von Verunreinigungen aus dem Fluid. So können Verunreinigungen, welche sich z. B. aufgrund ihrer Grösse oder chemischen Struktur nicht im Kompositmaterial absorbieren lassen, durch die freigesetzten Wirkstoffe im Fluid ausgefällt oder durch eine chemische Reaktion in eine inerte Form umgewandelt werden.

Gleichzeitig wird durch die Abgabe von sterilisierenden Wirkstoffen in das Fluid bewirkt, dass bei stark von Mikroorganismen befallenen Fluiden in einem schnellen Sterilisationsschritt sämtliche Mikroorganismen abgetötet werden. Die neu in das Fluid gelangenden Mikroorganismen können dann problemlos durch eine geringe Menge von bevorzugt katalytisch wirkendem Feststoff-Biozid eliminiert werden.

Die erfindungsgemässen Erzeugnisse und die erfindungsgemässen Verfahren eignen sich im Speziellen für Fluide, welche Verunreinigungen enthalten, die die Wirkung der oberflächenaktiven Feststoff-Biozide reduzieren. Die Fluide selbst können beispielsweise als Flüssigkeiten oder Gase vorliegen und aus einem reinen Stoff oder Stoffgemischen, welche homogen oder inhomogen sein können, bestehen. Besonders vorteilhaft ist das Verfahren zur Reinigung von Emulsionen, welche bevorzugt Öl und Wasser enthalten und insbesondere als Kühlschmieremulsion eingesetzt werden. Mikroorganismen, wie z. B. Bakterien, welche in derartigen Emulsionen leben, finden ideale Bedingungen zur Vermehrung vor und produzieren im Fluid meist mehrere unterschiedliche Stoffwechselprodukte, welche die biozide Wirkung des Feststoff-Biozids stark beeinträchtigen können, indem sie sich z. B. an der Oberfläche anlagern.

Mikroorganismen, welche in öligen Emulsionen vorkommen, produzieren unter anderem eine Vielzahl von schwefelhaltigen Verbindungen, die meist übel riechen und eine hohe Affinität oder Reaktivität zu/mit einer Vielzahl von Stoffen, wie z. B. Metallen, aufweisen. Das Kompositmaterial zur Absorption von Verunreinigungen und Freisetzung von Wirkstoffen ist daher von Vorteil so ausgebildet, dass es Schwefel und/oder organische und/oder anorganische Schwefelverbindungen, welche als Verunreinigungen im Fluid vorliegen, absorbiert und/oder ausfällt und/oder chemisch in eine inerte Form überführt.

Je nach zu reinigendem Fluid kann das Kompositmaterial aber auch so ausgestaltet werden, dass es andere Verunreinigungen, z. B. sauerstoff- oder metallhaltige Verbindungen, absorbiert und neutralisiert.

Von Vorteil ist es des Weiteren, wenn die vom Kompositmaterial freigesetzten Wirkstoffe zur Ausfällung der Verunreinigungen in Form von Feststoffen führen und wenn die freigesetzten Wirkstoffe zudem eine antibiotische Wirkung aufweisen, welche insbesondere eine bakterizide und/oder fungizide Wirkung ist. Die Ausfällung der Verunreinigungen erlaubt eine einfache Filterung der unerwünschten Stoffe, wodurch die Funktion des Fluids erhalten bleibt und die umwelttoxikologische Belastung verringert wird, da die ausgefällten Abfallprodukte z. B. nicht mehr am Fluidkreislauf teilnehmen. Besonders bei Motorenölen, Schmiermitteln, Kühlemulsionen, Flüssigkeiten im Sanitärbereich oder im Medizinalbereich ist es unabdingbar, den häufig auftretenden Bakterien- und Pilzbefall konsequent zu verhindern, da derartige Mikroorganismen z. B. durch Säureabgabe die Eigenschaften der eingesetzten Fluide stark verändern oder wie im Sanitär- oder im Medizinalbereich gar zur unmittelbaren Gefahr für Personen werden.

Bei den freigesetzten Wirkstoffen des Kompositmaterials handelt es sich besonders vorteilhaft um Metalle und/oder Metallverbindungen, welche bevorzugt Ag und insbesondere Cu und Zn umfassen. Metalle und Metallverbindungen weisen eine hohe Affinität gegenüber einer Vielzahl von insbesondere sauerstoff- und schwefelhaltigen Verbindungen auf. Bei einer Abgabe in ein zu reinigendes Fluid können somit die Verunreinigungen durch die Metalle oder Metallverbindungen gebunden und neutralisiert oder durch eine chemische Reaktion in eine inerte Form umgewandelt werden. Zudem wirken viele Metalle, insbesondere Ag, aber auch Cu oder Zn, biozid, was bei einer Abgabe in das Fluid zu einer Abtötung der vorhandenen Mikroorganismen führt. Im Besonderen ist bekannt, dass Ag-lonen die Permeabilität von Zellwänden beeinflussen und Schwefelbrücken in Eiweissen binden können, was zu einer Störung der Enzymfunktionen in der Zelle und schlussendlich zum Absterben der Mikroorganismen führen kann.

Bei einer Zugabe des Feststoff-Biozids zum Fluid werden bevorzugt keine chemischen Verbindungen, insbesondere keine Metalle oder Metallverbindungen, an das Fluid abgegeben. Konkret wird darunter verstanden, dass die Menge an abgegebenen chemischen Verbindungen im thermodynamischen Gleichgewicht pro 9.8 g Feststoff-Biozid weniger als 2 µg/l beträgt. Das Feststoff-Biozid wirkt dann nur aufgrund von Oberflächenwechselwirkungen mit den Mikroorganismen. Durch diesen katalytischen Wirkmechanismus wird erreicht, dass zur Entfaltung der bioziden Wirkung keine chemischen Stoffe verbraucht werden. Die Feststoff-Biozide können demnach langzeitig im Fluid verbleiben, ohne dass ihre Aktivität abnimmt, was den Verbrauch an Ressourcen minimiert und die umwelttoxikologische Belastung reduziert.

Bezüglich des absorbierenden und Wirkstoff-freisetzenden Kompositmaterials wird die Aufgabe erfindungsgemäss dadurch gelöst, dass es ein Substrat und darin eingelagerte und/oder gebundene Metalle oder Metallverbindungen umfasst.

Metalle umfassen dabei einerseits Metallatome, welche als Kationen, Anionen oder in neutraler Form vorliegen können. Andererseits können die Metalle aber auch als rein metallische Verbünde, bestehend z. B. aus mehreren Metallatomen, vorliegen. Metallverbindungen können beispielsweise Metall-Komplexe oder metallhaltige Festkörper, wie z. B. Metalloxide, Metallsalze oder metallhaltige Zeolithe, sein. Die metallhaltigen Stoffe können dabei in atomarer bzw. molekularer Form, als amorphe oder kristalline Partikel mit Dimensionen insbesondere im Nanometer-Bereich und/oder als makroskopische Festkörper, insbesondere mit einer Grösse im Bereich von Mikrometern, vorliegen.

Als Metall oder in den Metallverbindungen der absorbierenden und Wirkstoff-freisetzenden Kompositmaterialien ist bevorzugt Ag und besonders bevorzugt zusätzlich Zn und/oder Cu enthalten. Derartige Metalle und deren Verbindungen weisen eine hohe Affinität gegenüber einer Vielzahl von insbesondere sauerstoff- und schwefelhaltigen Verbindungen auf, womit durch das Kompositmaterial eine Absorptionswirkung für derartige Kontaminationen erreicht wird. Die enthaltenen Metalle wirken zudem biozid, was bei einer Abgabe in das Fluid zu einer Abtötung der vorhandenen Mikroorganismen führt. Die keimtötende Wirkung basiert dabei unter anderem auf dem oligodynamischen Effekt, welcher eine Änderung des osmotischen Drucks im Mikroorganismus hervorruft. Zudem können insbesondere Ag-Ionen über einen katalytischen Mechanismus Hydroxylradikale bilden, welche im Fluid ebenfalls eine schädigende Wirkung auf Mikroorganismen aufweisen.

Durch die Verwendung eines Substrats ist es möglich, unterschiedliche Metalle oder andere Wirkstoffe im Substrat einzulagern, ohne das Kompositmaterial dafür jedes Mal neu zu entwickeln. Die Metalle oder Metallverbindungen können beispielsweise durch schwache Wechselwirkungen, wie z. B. van-der-Waals-Wechselwirkungen oder elektrostatische Wechselwirkungen in das Substrat eingelagert sein. In einer anderen Variante können die die Metalle oder Metallverbindungen durch chemische Bindungen, wie z. B kovalente Bindungen oder Komplexierung, mit dem Substrat verbunden sein.

Grundsätzlich eignen sich als Substratmaterialien anorganische oder organische Verbindungen, welche durch eine geeignete Behandlung in poröse Feststoffe von definierter Form und Grösse überführt werden können und chemisch möglichst inert sind. In einer vorteilhaften Ausführungsform enthalten die Substrate modifizierte Polysacharide und besonders bevorzugt zusätzlich Polyacrylamide und/oder Amine. Derartige Substrate sind in vielen Fluiden, insbesondere in Wasser/Öl-Emulsionen chemisch inert.

In einer weiteren Variante können Substrate eingesetzt werden, die eine genau definierte Porengrösse und chemische Zusammensetzung aufweisen. Geeignet sind beispielsweise Zeolithe. Dadurch wird es möglich, gezielt Verunreinigungen von bestimmter Grösse oder mit bestimmten chemischen Eigenschaften aus dem Fluid zu absorbieren. Damit wird eine chemische Selektivität erreicht, die verhindert, dass die Kompositmaterialien unnötigerweise Verunreinigungen absorbieren, welche die Feststoff-Biozide gar nicht kontaminieren. Dadurch lässt sich der Verbrauch an benötigten chemischen Substanzen zusätzlich reduzieren.

Bezüglich des Feststoff-Biozids wird die Aufgabe erfindungsgemäss dadurch gelöst, dass es mit Vorteil oberflächenaktiv ist und ein Substrat und Metalle oder Metallverbindungen umfasst, welche an der Oberfläche des Substrats und/oder oberflächennah ein- oder angelagert und/oder gebundenen sind.

Wie beim Kompositmaterial umfassen die Metalle dabei einerseits Metallatome, welche als Kationen, Anionen oder in neutraler Form vorliegen können. Andererseits können die Metalle aber auch als rein metallische Verbünde, bestehend z. B. aus mehreren Metallatomen, vorliegen. Metallverbindungen können beispielsweise Metall-Komplexe oder metallhaltige Festkörper, wie Metalloxide, Metallsalze oder metallhaltige Zeolithe, sein. Die metallhaltigen Stoffe können dabei in atomarer bzw. molekularer Form, als amorphe oder kristalline Partikel mit Dimensionen, insbesondere im Nanometer-Bereich, und/oder als makroskopische Festkörper, insbesondere mit einer Grösse im Bereich von Mikrometern, vorliegen.

Durch die Konzentration im Bereich der Oberfläche des Substrats kann die Menge an Metallen oder Metallverbindungen im Vergleich zu einer homogenen Verteilung im gesamten Substrat deutlich reduziert werden.

Es ist auch möglich, die Wirkstoffe zwar oberflächennah, aber nicht direkt an der Oberfläche des Substrats anzubringen. Wird zudem ein Substrat mit poröser Struktur verwendet, kann z. B. über die Porengrösse gesteuert werden, welche Mikroorganismen aufgrund ihrer Grösse durch die Poren genügend nahe zu den Wirkstoffen vordringen können. Damit ist es z.B. möglich, oberflächenaktive Feststoff-Biozide einzusetzen, die selektiv bestimmte Mikroorganismen abzutöten vermögen.

Grundsätzlich eignen sich als Substratmaterialien für die Feststoff-Biozide anorganische oder organische Verbindungen, welche durch eine geeignete Behandlung in Feststoffe von definierter Form und Grösse überführt werden können und chemisch möglichst inert sind. In einer vorteilhaften Ausführungsform enthalten die Substrate Alginate und bevorzugt zusätzlich Polyacrylamide und/oder Amine und/oder Aluminiumsilikate bzw. Zeolithe. Alginate, bzw. Salze der Alginsäure, sind Polymere aus α-L-Guluronsäure und β -D-Mannuronsäure, welche sich sehr gut zur Gelbildung eignen und physiologisch unbedenklich sind.

In den Feststoff-Bioziden ist als Metall oder in den Metallverbindungen bevorzugt Ag enthalten, welches insbesondere in einem Ag-Komplex vorliegt, besonders bevorzugt in einem Ag-Aminokomplex. Ag und seine Verbindungen haben eine stark biozide Wirkung auf verschiedenste Mikroorganismen. Insbesondere Ag in ionischer Form wirkt durch den oligodynamischen Effekt, wie vorstehend bei den Kompositmaterialien beschrieben, stark schädigend auf lebende Zellen.

Von Vorteil sind die Substrate des Feststoff-Biozids und/oder des Kompositmaterials als Hydrogele ausgebildet, welche bevorzugt quellfähig und/oder elastisch sind. Hydrogele sind wasserhaltige Polymere, welche aber selbst in Wasser nicht löslich sind. Die Moleküle bzw. Polymere im Hydrogel sind z. B. durch kovalente oder ionische Bindungen und/oder durch Verschlaufungen der Polymerketten verbunden und bilden ein dreidimensionales poröses Netzwerk. Aufgrund von hydrophilen Polymerkomponenten können Hydrogele in Wasser physikalisch aufquellen, ohne dabei aber aufgelöst zu werden. Besonders vorteilhaft für Anwendungen des erfindungsgemässen Verfahrens im medizinischen Bereich ist die Tatsache, dass Hydrogele eine hohe Biokompatibilität aufweisen. Gleichzeitig weisen Hydrogele auch eine hohe mechanische Belastbarkeit und chemische Stabilität auf, so dass sie problemlos in stark strömenden und chemisch aggressiven Fluiden, wie z. B. in Schmieremulsionen, Motorenölen, Kühlemulsionen oder entsprechenden Fluidkreisläufen, einsetzbar sind. Gerade bei den Feststoff-Bioziden ist eine hohe chemische Stabilität von grossem Vorteil, da die Feststoff-Biozide über lange Zeit im zu reinigenden Fluid verbleiben und von verschiedenen chemischen Substanzen angegriffen werden.

Die Quellfähigkeit wirkt sich zudem positiv auf die absorbierenden Eigenschaften des Kompositmaterials aus. Durch die Volumenvergrösserung beim Aufquellen bilden sich Öffnungen und Kanäle im Hydrogel, wodurch die Verunreinigungen aus dem Fluid rasch bis in innere Bereiche des Kompositmaterials diffundieren können. Dies führt zu einer hohen Absorptionsleistung, was bedeutet, dass die Verunreinigungen innert kurzer Zeit aus dem Fluid entfernt werden. Gleichzeitig ermöglicht das Aufquellen eine rasche Abgabe der Wirkstoffe aus dem Hydrogel in das zu reinigende Fluid. Beide Effekte resultieren in einem bestmöglichen Schutz der Feststoff-Biozide, indem die Verunreinigungen rasch absorbiert und vorhandene Mikroorganismen in kurzer Zeit durch die freigesetzten Wirkstoffe abgetötet werden.

Das Feststoff-Biozid und/oder das Kompositmaterial liegen bevorzugt in Form von Polyedern, wie Quadern oder Platten, kugelförmigen Teilchen, als Granulat, als Pulverkörner oder als Beschichtungen auf Trägermaterialien, insbesondere auf Gefässwänden, vor. Je nach Verwendungszweck kann die Form der Materialien angepasst werden. Besonders bevorzugt ist die Beschichtung von Gefässwänden. So kann z. B. das rein oberflächenaktive Feststoff-Biozid, welches langzeitig wirkt, als Beschichtung einer Wand eines Fluidreservoirs angebracht werden und das absorbierende und Wirkstofffreisetzende Kompositmaterial wird als Granulat zugegeben. Dadurch lässt sich das Kompositmaterial nach der Entfaltung seiner Wirkung wieder aus dem Fluid entfernen.

Liegen die Feststoff-Biozide und/oder die Kompositmaterialien als kugelförmige Teilchen oder einzelne Körner eines Granulats vor, weisen diese bevorzugt einen Durchmesser von 0.1-5 mm, insbesondere von 0.5-1.2 mm, auf. Dadurch wird die Oberfläche der Materialien im Verhältnis zum Volumen optimiert. Bei den oberflächenaktiven Feststoff-Bioziden ist damit sichergestellt, dass pro Masse an zugegebenem Material eine genügend grosse Oberfläche zur Wechselwirkung mit den Mikroorganismen zur Verfügung steht. Für die absorbierenden Kompositmaterialien ist gleichzeitig gewährleistet, dass genügend Absorptionsvolumen für die Verunreinigungen zur Verfügung vorliegt.

Die Feststoff-Biozide und Kompositmaterialien können grundsätzlich gleichzeitig dem zu reinigenden Fluid beigegeben werden. Dies hat den Vorteil, dass sich ein Fluid sehr einfach durch eine einmalige Zugabe der Erzeugnisse Sterilisieren und langfristig Konservieren lässt. Um jedoch die optimale Wirkung der Erzeugnisse zu erzielen, ist es vorteilhaft, das zu reinigende Fluid in einem ersten Verfahrensschritt nur mit dem Kompositmaterial zur Absorption und Freisetzung von Wirkstoffen zu behandeln und erst in einem zweiten Verfahrensschritt oberflächenaktive Feststoff-Biozide zuzugeben. Dadurch werden zuerst sämtliche Verunreinigungen und Mikroorganismen aus dem Fluid entfernt und das nachträglich zugegebene Feststoff-Biozid kann seine volle Wirkung entfalten. Gelangt zu einem späteren Zeitpunkt eine grosse Zahl von Mikroorganismen oder Verunreinigungen in ein bereits mit dem Feststoff-Biozid versetztes Fluid, so kann natürlich wieder vom absorbierenden und Wirkstoff-freisetzenden Kompositmaterial zugegeben werden, um die Zahl der Mikroorganismen und die Verunreinigungen schnell zu reduzieren und damit die biozide Wirkung des Feststoff-Biozids aufrecht zu erhalten.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung von Ausführungsbeispielen verwendeten Zeichnungen zeigen schematisch:
- Fig. 1: Den Aufbau eines oberflächenaktiven Feststoff-Biozids.
- Fig. 2: Den Aufbau eines Kompositmaterials zur Absorption und Freisetzung von Wirkstoffen.
- Fig. 3: Die Zugabe von Feststoff-Biozid zu einem mit Verunreinigungen kontaminierten Fluid.
- Fig. 4: Die zeitliche Abnahme der Schwefelkonzentration in einer wässrigen Lösung und einer Emulsion nach Zugabe von Kompositmaterial.
- Fig. 5: Die Wirkungsweise eines absorbierenden und Wirkstoff-freisetzenden Kompositmaterials.
- Fig. 6: Die Wirkungsweise eines Feststoff-Biozids nach Eliminierung der Verunreinigungen im Fluid.

Grundsätzlich werden nachfolgend gleiche Teile mit gleichen Bezugszeichen versehen.

### Wege zur Ausführung der Erfindung

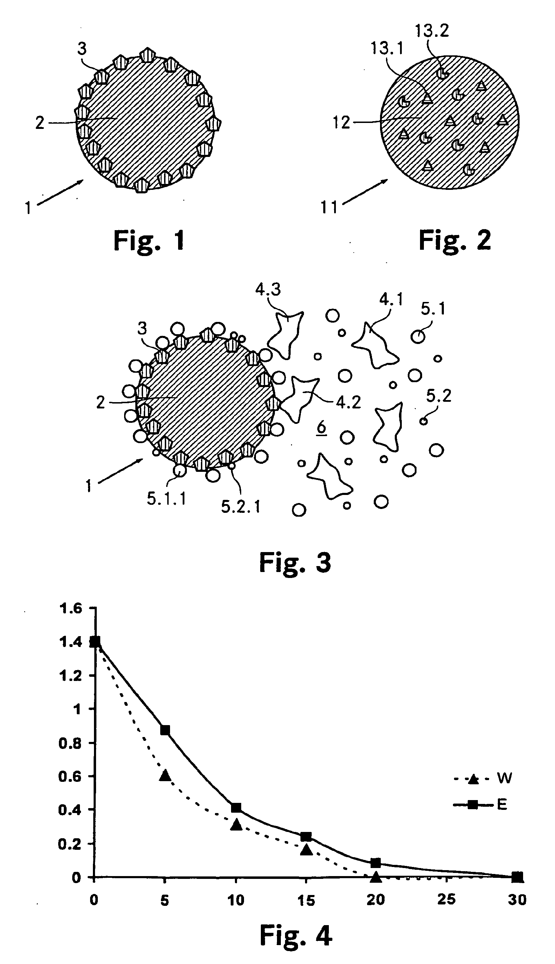

Ein Feststoff-Biozid 1 besteht, wie in Fig. 1 gezeigt, aus einem Substrat 2 aus den organischen Komponenten Natrium-Alginat, Acrylamid, N,N'-Methylenbisacrylamid und allenfalls Aluminiumsilikaten. Als oberflächenaktive Stoffe 3 sind Ag-Aminokomplexe in oberflächennahen Bereichen des Substrats 2 eingelagert.

In Fig. 2 ist der Aufbau eines absorbierenden und Wirkstoff-freisetzenden Kompositmaterials 11 gezeigt. Das Substrat 12 besteht aus wässrigen modifizierten Polysachariden, Acrylamid und N,N'-Methylenbisacrylamid. Darin eingelagert sind die Wirkstoffe 13.1 in Form von Ag-Amino-Komplexen. Als zusätzlicher Wirkstoff 13.2 ist Zn in metallischer Form eingelagert.

Fig. 3 zeigt in einem Fluid 6 gelöste Verunreinigungen 5.1, 5.2, welche hauptsächlich aus unterschiedlichen schwefelhaltigen Verbindungen bestehen. Sie weisen eine hohe Affinität gegenüber den oberflächenaktiven Stoffen 3 bzw. den Ag-Amino-Komplexen des Feststoff-Biozids 1 auf. Dadurch werden die oberflächenaktiven Stoffe 3 durch die adsorbierten Verunreinigungen 5.1.1, 5.2.1 kontaminiert und verlieren ihre biozide Funktion. Zur Entkeimung des Fluids 6 ist es aber unerlässlich, dass die Bakterien 4.1 in engen Kontakt mit den oberflächenaktiven Stoffen 3 des Feststoff-Biozids 1 treten, wie für ein Bakterium 4.2 gezeigt. Bakterien 4.3, die das Feststoff-Biozid an einer Stelle kontaktieren, die bereits durch absorbierte Verunreinigungen 5.1.1, 5.1.2 besetzt sind, werden nicht abgetötet. Da nur noch eine geringe Menge an nicht kontaminierten oberflächenaktiven Stoffen 3 zur Verfügung steht, bleiben zu viele Mikroorganismen 4.1 im Fluid, wodurch ihre Anzahl durch rasche Vermehrung weiter ansteigt.

Fig. 4 zeigt den Verlauf der S²⁻-Konzentrationseinheiten von ppm ("parts per million, vertikale Achse) in der wässrigen Lösung W (dreieckige Datenpunkte) und der Emulsion E (quadratische Datenpunkte) als Funktion der Zeit t in Minuten (horizontale Achse). Dabei ist zu erkennen, dass die anfängliche S²⁻-Konzentration in beiden Flüssigkeiten zur Zeit t = 0 min. 1.4 ppm beträgt und bereits nach t = 5 min. auf weniger als 0.9 ppm in der Emulsion E und 0.6 ppm in der wässrigen Lösung W abgenommen hat. Die S²⁻-Konzentration beträgt zur Zeit t = 10 min. 0.4 ppm in der Emulsion E und 0.3 ppm in der wässrigen Lösung W. Nach t = 15 min. liegen in beiden Flüssigkeiten noch ca. 0.2 ppm S²⁻ vor. Nach t = 20 min. ist in der wässrigen Lösung W bereits kein S²⁻ mehr nachweisbar, während in der Emulsion E weniger als ca. 0.1 ppm vorliegen. Nach 30 min. sind beide Lösungen vollständig frei von S²⁻, d. h. die Konzentrationen betragen jeweils 0 ppm.

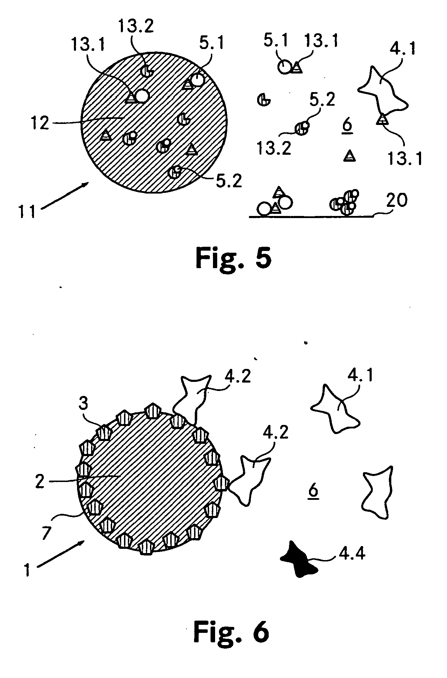

In Fig. 5 sind die Vorgänge in einem Fluid schematisch dargestellt. Wird das Kompositmaterial 11 dem Fluid zugegeben, werden die Ag-haltigen Wirkstoffe 13.1 teilweise an das Fluid 6 abgegeben. Im Fluid 6 reagieren die Wirkstoffe 13.1 mit den Verunreinigungen 5.1, wodurch diese in eine inerte Form überführt oder ausgefällt werden und sich an Gefässwänden 20 als Festkörper ablagern. Gleichzeitig werden die Mikroorganismen 4.1 durch die Wirkstoffe 13.1 abgetötet. Zudem absorbiert das Kompositmaterial 11 einen Teil der im Fluid 6 vorhandenen Verunreinigungen 5.1, indem es diese an die noch eingelagerten Wirkstoffe 13.1 bindet.

Fig. 6 zeigt schematisch den Wirkmechanismus des Feststoff-Biozids 1 auf im Fluid 6 gelöste Mikroorganismen 4.1. Mikroorganismen 4.2, welche mit dem Feststoff-Biozid 1 Kontakt haben, werden durch die katalytische und biozide Wirkung der oberflächenaktiven Stoffe 3 abgetötet. Anschliessend gelangen sie wieder zurück in das Fluid 6 und liegen als inaktives Biomaterial 4.4 vor. Aufgrund der Tatsache, dass durch die Vorbehandlung des Fluids 6 mit Kompositmaterial 1 praktisch keine Verunreinigungen mehr vorhanden sind, bleibt die Oberfläche 7 des Feststoff-Biozids 1 sauber, wodurch eine langzeitige biozide Wirkung bzw. eine Konservierung des Fluids ermöglicht wird.

**Feststoff-Biozid, Beispiel A:** Wässriges Natrium-Alginat (12 ml, 4 % w/v, mit geringer Viskosität, Sigma), Wasser (5 ml), wässriges Acrylamid (8 ml, 40% in H₂O, purum, Fluka), wässriges N,N'-Methylenbisacrylamid (4 ml, 2 % w/v) und N,N,N',N'-tetramethylethylendiamin (0.1 ml in 1 ml H₂O) wurden zu einer Lösung zusammengemischt. Aus der Lösung wurden mit einem Verkapsler-System (Nisco Engineering) mit einer Düsenöffnung von 0.08-0.6 mm kugelförmige Tröpfchen mit einem Durchmesser zwischen 0.1-1.2 mm geformt. Die kugelförmigen Tröpfchen wurden zu einer gerührten Lösung aus Ammoniumperoxodisulfat (80 ml, 1 % w/v, mit 0.1 M Kalzium-Chlorid) bei 60°C in einen Becher gegeben und während 30 min. inkubiert, wobei sich kugelförmige Teilchen formen. Die Teilchen wurden aus der Härtelösung durch Sieben getrennt, 5-mal mit 100 ml Wasser gewaschen, in einer wässrigen Lösung aus Natrium-Citrat (100 ml, 0.1 M) während 6 Stunden bei Zimmertemperatur (RT) gereift und danach wieder 5-mal mit 100 ml Wasser gewaschen. Die Citrat-Behandlung und die Waschvorgänge wurden zweimal wiederholt. Die resultierenden kugelförmigen Teilchen wurden in einer wässrigen Lösung aus Kalium-Hydroxid (500 ml, 5 % w/v) während 5 Stunden gekocht. Parallel dazu wurde eine 3-10 %-ige Lösung aus Ag-Aminokomplexen mit AgNO₃ und 2-Methyl-aminopyridin hergestellt und 50 ml davon der wässrigen Lösung mit den kugelförmigen Teilchen bei während dem Kochen bei verschiedenen Temperaturen zugegeben. Nach 4-12 Stunden Kochen und gleichzeitigem Entfernen von Ammoniak, wurden die kugelförmigen Tröpfchen durch Sieben abgetrennt, 3-mal in 5 Liter Wasser während je 2 Stunden inkubiert und schliesslich bei erhöhten Temperaturen und unter Vakuum getrocknet. Das Gewicht der getrockneten kugelförmigen Teilchen aus Poly(acrylamide-co-Kaliumacrylat-co-N,N'-Methylenbisacrylamide) beträgt 7.8 ± 0.5 mg und 203 ± 10 mg nach 3-stündigem Kontakt mit 10 ml destilliertem Wasser bei Raumtemperatur.

**Feststoff-Biozid, Beispiel B**: Wässriges Natrium-Alginat (12 ml, 4 % w/v, low viscosity, Sigma), Wasser (5 ml), wässriges Acrylamid (8 ml, 40% in H₂O, purum, Fluka), wässriges N,N'-Methylenbisacrylamid (4 ml, 2 % w/v) und N,N,N',N'-tetramethylethylendiamin (0.1 ml in 1 ml H₂O) wurden zu einer Lösung zusammengemischt. Dazu wurden 0.5 g Aluminiumsilikat in Form eines feinen Pulvers gegeben und während 2.5 Stunden gerührt. Aus der Lösung wurden mit einem Verkapsler-System (Nisco Engineering) mit einer Düsenöffnung von 0.08-0.6 mm kugelförmige Tröpfchen mit einem Durchmesser zwischen 0.1-1.2 mm geformt. Die kugelförmigen Tröpfchen wurden zu einer gerührten Lösung aus Ammoniumperoxodisulfat (80 ml, 1 % w/v, mit 0.1 M Kalzium-Chlorid) bei 60°C in einen Becher gegeben und während 30 min. inkubiert, wobei sich kugelförmige Teilchen formten. Die Teilchen wurden aus der Härtelösung durch Sieben getrennt, 5-mal mit 100 ml Wasser gewaschen, in einer wässrigen Lösung aus Natrium-Citrat (100 ml, 0.1 M) während 6 Stunden bei Zimmertemperatur (RT) gereift und danach wieder 5-mal mit 100 ml Wasser gewaschen. Die Citrat-Behandlung und die Waschvorgänge wurden zweimal wiederholt. Die resultierenden kugelförmigen Teilchen wurden in einer 5 %-igen wässrigen Lösung AgNO₃ während 45 min. inkubiert, 3-mal mit 5 Liter milliO-Wasser je 2 Stunden lang gewaschen und bei 5°C in Wasser gelagert.

**Kompositmaterial, Beispiel C**: Ag-Amino-Komplexe wurden durch stöchiometrisches Mischen von AgNO₃ und Amino-Pyridinen synthetisiert. Danach wurden 80 ml einer 3 %-igen wässrigen Lösung aus modifizierten Polysachariden bei 60°C mit 20 ml einer wässrigen Lösung aus 1-15 g der Ag-Amino-Komplexe gemischt und während 30 min. erhitzt.

Aus der Lösung wurden mit einem Verkapsler-System (Nisco Engineering) mit einer Düsenöffnung von 0.08-0.6 mm kugelförmige Tröpfchen mit einem Durchmesser zwischen 0.1-1.2 mm geformt. Die kugelförmigen Tröpfchen wurden zu flüssigem Stickstoff in einen Becher gegeben und während 5 min. gerührt. Dabei bilden sich kugelförmige Teilchen, welche durch Sieben von der Lösung abgetrennt wurden.

**Kompositmaterial, Beispiel D:** Wasser (5 ml), wässriges Acrylamid (8 ml, 40 % w/v, purum, Fluka), wässriges N,N'-Methylenbisacrylamid (4 ml, 2 % w/v) und N,N,N',N'-Tetramethylethylendiamin (0.1 ml in 1 ml H₂O) und wässrige modifizierte Polysacharide (20 ml, 5 % w/v) wurden zu einer Lösung zusammengemischt und bei 50°C während 30 min. erhitzt. Danach wurden 1.3 g feines Zn-Pulver und 0.7 g AgNO₃ zugegeben Aus der Lösung wurden mit einem Verkapsler-System (Nisco Engineering) mit einer Düsenöffnung von 0.08-0.6 mm kugelförmige Tröpfchen mit einem Durchmesser zwischen 0.1-1.2 mm geformt Die kugelförmigen Tröpfchen wurden zu einer gerührten Lösung aus Ammoniumperoxodisulfat (80 ml, 1 % w/v, mit 0.1 M Kalzium-Chlorid) bei 60°C in einen Becher gegeben und während 30 min. inkubiert, wobei sich kugelförmige Teilchen formten.

**Vergleichsexperiment, Beispiel E:** In einem ersten Experiment wurden zu Vergleichszwecken verschiedene Typen von verschmutzten, kommerziell erhältlichen MOTOREX-Kühlschmieremulsionen auf Wasser/Öl-Basis mit rein oberflächeaktiven Feststoff-Bioziden 1 gemäss den aus dem Stand der Technik bekannten Verfahren behandelt und deren biozide Wirkung als Funktion der Zeit untersucht. Hierzu wurde die Anzahl Bakterien pro Milliliter Emulsion zu verschiedenen Zeitpunkten nach der Zugabe der Feststoff-Biozide 1 bestimmt. Zur besseren Durchmischung wurden die Emulsionen jeweils nach Zugabe der Feststoff-Biozide 1 gerührt oder geschüttelt. Zur Ermittlung der Anzahl Bakterien wurden jeweils drei Petri-Schalen mit identischen und definierten Aliquoten bzw. Teilproben der Emulsion überzogen und während 24 Stunden inkubiert. Die Anzahl der Bakterien wurde dann automatisch mit einem Acolyte^{™} Kolonien-Zähler an allen drei inkubierten Teilproben bestimmt.

In Tabelle 1 ist eine Zusammenfassung der Experimente gezeigt. In einem ersten Experiment (Nr. 1) ist die Anzahl der Bakterien 4.1 pro ml einer stark verschmutzten Emulsion vor der Behandlung mit dem Feststoff-Biozid 1 grösser als 10·10⁷. Nach Zugabe von 39 mg Feststoff-Biozid 1 pro 50 ml Emulsion und einer Inkubationszeit von 72 h hat die Bakterienzahl auf 10·10² Bakterien/ml abgenommen. Nach 126 h Inkubationszeit, ohne weitere Zugabe von Feststoff-Biozid 1, hat die Anzahl der Bakterien 4.1 bereits wieder auf 10·10⁴ Bakterien/ml zugenommen. Im zweiten Experiment (Nr. 2), mit einer Emulsion des gleichen Typs, liegt die Anzahl an Bakterien 4.1 vor der Behandlung mit dem Feststoff-Biozid 1 nach 145 h Lagerung bei Zimmertemperatur bei 10·10⁶. Nach Zugabe von 156 mg Feststoff-Biozid 1 pro 45 ml Emulsion und einer Inkubationszeit von 48 h sinkt die Anzahl der Bakterien auf 10·10⁴ pro ml Emulsion. Die Anzahl Bakterien/ml liegt nach 196 h Inkubationszeit aber bereits wieder 10·10⁶ und ändert sich auch nach 300 h Inkubationszeit nicht mehr.

**Tabelle 1:**

| **Experiment Nr.** | **Typ der Emulsion** | **Zugabe an Feststoff-Biozid** | **Inkubationszeit** | **Bakterien/ml** |
|---|---|---|---|---|
| 1 | 7788 (090206) | 0 | 0 | > 10·10⁷ |
| | | ca. 39 mg/50 ml | 72 h | 10·10² |
| | | | 126 h | 10·10⁴ |
| 2 | 7788 (240206) | 0 | 145 h | 10·10⁶ |
| | | ca. 156 mg/45 ml | 48 h | 10·10⁴ |
| | | | 196 h | 10·10⁶ |
| | | | 300 h | 10·10⁶ |

Die beiden Experimente zeigen deutlich, dass sich die verwendeten Emulsionen nicht mit rein oberflächenaktiven Feststoff-Bioziden 1 langfristig Sterilisieren und Konservieren lassen. Dies ist auf die Kontaminierung der Feststoff-Biozide 1 mit Verunreinigungen 5.1.1, 5.2.1 aus den Emulsionen zurückzuführen. Aufgrund der gelblichen und/oder bräunlichen Verfärbung der Feststoff-Biozide 1 während den Experimenten lässt sich schliessen, dass es sich bei den Verunreinigungen 5.1.1, 5.2.1 zumindest teilweise um schwefelhaltige Verbindungen handelt. Schwefelhaltige Stoffe werden unter anderem durch Stoffwechselprodukte der Bakterien oder Pilze 4.1 in der Emulsion verursacht und sind besonders problematisch, da sie eine hohe Affinität zu den verwendeten Ag-haltigen Feststoff-Bioziden 1 aufweisen.

**Entschwefelung, Beispiel F:** Die Kompositmaterialien zur Absorption und Wirkstoff-Freisetzung 11 wurden in einem ersten Test auf ihre Fähigkeit zur Schwefelreduktion untersucht. Zur Messung der Schwefelverminderung schwefelhaltiger Flüssigkeiten wurden dabei die folgenden Experimente durchgeführt:

500 ml Wasser (bidestilliert) wurde mit 1.4 ppm Schwefel (S²⁻) versetzt und unter Rühren mit je 1 g Kompositmaterial 11 (Beispiel C), welches in Form von Platten gegossen wurde, behandelt. Zur "Verschwefelung" wurde dabei eine wässrige Stammlösung mit einer Konzentration von 14 ppm S²⁻, ausgehend von Natriumsulfid, verwendet.

Die Schwefelkonzentrationen wurden nach jeweils 0, 5, 10, 15, 20, 25 und 30 min. über spezifische Farbnachweise spektroskopisch bestimmt. Das gleiche Experiment wurde mit 500 ml einer Emulsion (Motorex 7788) anstelle von Wasser durchgeführt.

Kompositmaterialien zur Absorption und Wirkstoff-Freisetzung 11 wurden danach zur Sterilisierung von verschiedenen Typen von verschmutzten, kommerziell erhältlichen MOTOREX-Kühlschmieremulsionen 6 auf Wasser/Öl-Basis eingesetzt. Vor der Behandlung wiesen sämtliche der verwendeten Emulsionen 6 eine hohe Bakterienkonzentration auf, welche mindestens 10·10⁶ Bakterien/ml beträgt. Emulsionen gleichen Typs waren dabei teilweise unterschiedlich stark verschmutzt, da sie eine unterschiedliche Vorgeschichte hatten. Zur Sterilisierung und Entfernung der Verunreinigungen 5.1, 5.2 wurden den Emulsionen 6 jeweils 100 mg des Kompositmaterials 11 (Beispiel D) pro ml der Emulsion zugegeben und die Anzahl der Bakterien 4.1 nach dem oben beschriebenen Verfahren zu unterschiedlichen Zeiten bestimmt. Tabelle 2 gibt einen Überblick über die durchgeführten Experimente und Resultate. Es ist deutlich zu erkennen, dass bei der Mehrheit der Emulsionen 6 bereits nach einer Inkubationszeit von 24 h keine Bakterien 4.1 mehr nachgewiesen werden können. Nach 6 Tagen (6 d) weist nur noch eine Emulsion (7711) 6 eine geringe Menge an Bakterien 4.1 auf und nach 20 Tagen (20 d) sind sämtliche Emulsionen 6 frei von Bakterien 4.1. Die Resultate belegen deutlich die biozide Wirkung, der Kompositmaterialien 11.

**Tabelle 2:**

| **Emperiment Nr.** | **Typ der Emulsion** | **Bakterien/ml nach 24 h** | **Bakterien/ml nach 6 d** | **Bakterien/ml nach 20 d** |
|---|---|---|---|---|
| 1 | 7788 | 0 | 0 | 0 |
| 2 | 7788 | 0 | 0 | 0 |
| 3 | 7788 | 10·10³ | 0 | 0 |
| 4 | 7788 | 0 | 0 | 0 |
| 5 | 7755 Aero | 0 | 0 | 0 |
| 6 | 7755 Aero | 10·10² | 0 | 0 |
| 7 | 7755 Aero | 0 | 0 | 0 |
| 8 | 7733 | 0 | 0 | 0 |
| 9 | 7733 | 10·10² | 0 | 0 |
| 10 | 7722 | 0 | 0 | 0 |
| 11 | 7722 | 0 | 0 | 0 |
| 12 | 7722 | 0 | 0 | 0 |
| 13 | 7722 | 0 | 0 | 0 |
| 14 | 7711 | 10·10⁴ | 10·10¹ | 0 |
| 15 | V 8.01 | 0 | 0 | 0 |

**Konservierung mit Feststoff-Biozid, Beispiel H:** Die Konservierungswirkung der Feststoff-Biozide 1 wurde durch folgende Experimente untersucht: 1 Liter einer sterilen und von Verunreinigungen gereinigten Motorex-Emulsion vom Typ 7788 wurde mit 100 µl einer bakterienhaltigen Emulsion vom gleichen Typ (7788) auf 10·10³ Bakterien pro ml angeimpft und mit einem kugelförmigen Teilchen (Masse = 7.8 mg) des Feststoff-Biozids 1 (Beispiel A) versetzt. Die Anzahl der Bakterien 4.1 wurde nach dem oben beschriebenen Verfahren zu unterschiedlichen Zeiten bestimmt. Tabelle 3 zeigt eine Zusammenfassung der Experimente. Die Resultate zeigen deutlich, dass das Feststoff-Biozid 1 in der Lage ist, eine Bakterienkonzentration von 10·10³ Bakterien/ml innerhalb von 7 Tagen vollständig zu reduzieren und die Emulsion für 19 Tage zu konservieren. Nach 19 Tagen wurde die sterile Emulsion zum zweiten Mal angeimpft, diesmal aber mit 500 µl der bakterienhaltigen Emulsion vom Typ 7788, wodurch eine Bakterienkonzentration von 50·10³ Bakterien/ml resultierte. Zwei Tage nach dem zweiten Animpfen (t = 21 Tage) haben sich die Bakterien 4.1 stark vermehrt und es liegt eine Konzentration von 10·10⁶ Bakterien/ml vor, welche aber bereits nach weiteren 10 Tagen auf 10·10² Bakterien/ml abnimmt. Das Experiment zeigt deutlich, dass eine durch das Kompositmaterial gereinigte und sterilisierte Emulsion langfristig durch eine geringe Menge an Feststoff-Biozid 1 konserviert werden kann. Dabei kann das Feststoff-Biozid 1 auch eine zwischenzeitlich erhöhte Konzentration von bis zu 50·10³ Bakterien/ml wieder reduzieren. Höhere Bakterienkonzentrationen führen aber zu einer Deaktivierung der Oberflächenaktivität der Feststoff-Biozide 1, wie vorstehend beschrieben.

**Tabelle 3:**

| **t [Tage]** | **Bakterien/ml** | **Bemerkung** |
|---|---|---|
| 0 | 10·10³ | |
| 7 | 0 | |
| 10 | 0 | |
| 13 | 0 | |
| 19 | 0 | |
| 19 | 50·10³ | Nach Zugabe von 500 µl der bakterienhaltigen Emulsion |
| 21 | 10·10⁶ | |
| 25 | 10·10⁴ | |
| 31 | 10·10² | |

In einer weiteren vorteilhaften Variante können bei der Herstellung der Kompositmaterialien anstelle des Zn oder zusammen mit dem Zn zusätzlich Cu(II)-Komplexe zugegeben werden. Derartige Komplexe weisen ebenfalls eine hohe Affinität zu schwefel- und sauerstoffhaltigen Verbindungen auf und können dem Kompositmaterial 11 beispielsweise zur Optimierung der Absorptionswirkung auf bestimmte Verunreinigungen 5.1, 5.2 zugegeben werden. Auch andere Metalle, wie z. B. Hg, Sn, Fe oder Pb in neutraler oder ionischer Form, bzw. gebunden in einer chemischen Verbindung, können als biozide Wirkstoffe und/oder Absorber zugemischt werden.

Für Anwendungen unter chemisch aggressiven und/oder mechanisch anspruchvollen Bedingungen, wie z. B. bei hohem Druck im Fluid 6, können anstelle der oder zusammen mit den organischen Komponenten (Acrylamide, Alginate, Amine oder Polysacharide) auch andere Stoffe, welche poröse Strukturen bilden oder aufweisen, als Substratmaterialien für die Feststoff-Biozide 1 oder die Kompositmaterialien 11 verwendet werden. Geeignet sind insbesondere anorganischen Verbindungen, wie z. B. Zeolithe.

Anstelle einer Verkapselung können sowohl die Feststoff-Biozide (Beispiele A und B) als auch die Kompositmaterialien (Beispiele C und D) in Form von Platten, Quadern, Polyedern oder anderen Formen gegossen werden, welche z. B. für eine Verwendung in einem Fluidtank oder -reservoir zweckdienlich sind. Insbesondere die Feststoff-Biozide, welche eine lang anhaltende Wirkung aufweisen, können auch als Beschichtung auf die Gefässwände des Behälters mit dem zu reinigenden Fluid 6 aufgetragen werden.

Feststoff-Biozide 1 oder Kompositmaterialien 11 in Form von Teilchen oder als Granulat können auch in ein inaktives und für das Fluid 6 durchlässiges Trägermaterial, ein Gehäuse oder eine korbartige Struktur integriert sein, so dass die einzelnen Teilchen oder Körner nicht lose im Fluid herumschwimmen.

Alternativ zum beschriebenen Vorgehen können die Feststoff-Biozide 1 dem zu reinigenden Fluid 6 auch gleichzeitig mit dem Kompositmaterialien zur Absorption und Wirkstoff-Freisetzung 11 zugegeben werden. Dies ist möglich, weil die reinigende und sterilisierende Wirkung der Kompositmaterialien 11 sehr schnell eintritt und die Kontaminierung der Feststoff-Biozide 1 durch die Verunreinigungen ein weitaus langsamerer Prozess ist. So ist aus Fig. 4 ersichtlich, dass Schwefelverbindungen in einer Emulsion vom Typ 7788 durch das Kompositmaterial 1 1 bereits nach 30 min. vollständig entfernt werden. Ebenso sind die meisten der untersuchten Emulsionen bei gleicher Konzentration an Kompositmaterial 11 bereits nach 24 h frei von Bakterien (siehe dazu Tabelle 2). Wie aus Tabelle 3 ersichtlich, vertragen die Feststoff-Biozide 1 kurzzeitig, d. h. für einige Tage, auch Bakterienkonzentrationen von bis zu 50·10³ Bakterien/ml, ohne dass sie dadurch ihre Oberflächenaktivität und biozide Wirkung verlieren.

Anstelle der beschriebenen Emulsionen lassen sich auch andere Fluide 6 mit dem erfindungsgemässen Verfahren behandeln. Insbesondere konnte gezeigt werden, dass sich wässrige Lösungen, welche mit Escherichia coli-Bakterien (abgekürzt E. coli) versetzt wurden, sterilisieren und konservieren lassen. E. coli, welche sich in wässrigen physiologischen Flüssigkeiten vermehren können, führen beim Menschen ausserhalb des Darmbereichs zu einer Reihe von ernsthaften Infektionen, wie z. B. Harnwegsinfekte, Peritonitis (nach Operationen im Bauchraum), oder Meningitis bei Neugeborenen (Infektion während der Geburt). Im Speziellen wurden E. coli Bakterien in einer Petri-Schale kultiviert und mit filtriertem Evian™-Wasser auf eine Konzentration von 106 Zellen pro Milliliter verdünnt. Zu einer derartigen Lösung wurde dann Feststoff-Biozid 1 mit einer Konzentration von 99 mg/l gegeben. Nach einer Inkubationszeit von 72 h wurde die Konzentration der Bakterien durch das oben beschriebene Verfahren bestimmt. Dabei konnten keine E. coli mehr nachgewiesen werden. Diese Resultate zeigen, dass sich das erfindungsgemässe Verfahren auch für Anwendungen im medizinischen Bereich oder im Sanitärbereich für die Reinigung von Trink- oder Badewasser eignet.

Zusammenfassend ist festzustellen, dass ein neues Verfahren und ein Kombinationspräparat zur Sterilisierung und langzeitigen Konservierung von Fluiden entwickelt wurde. Das Verfahren beruht auf der Kombination eines absorbierenden und Wirkstoff-freisetzenden Kompositmaterials 11 mit einem katalytisch wirkenden Feststoff-Biozid 1. Aufgrund der Wirkung des Kompositmaterials 11 wird die Kontaminierung des oberflächenaktiven Feststoff-Biozids 1 verhindert, wodurch eine Langzeitwirkung erst ermöglicht wird. Durch die erfindungsgemässen Erzeugnisse und das Verfahren lassen sich insbesondere die benötigten Mengen an Sterilisierung- und Konservierungsmittel minimieren.

## Patentansprüche

1. Erzeugnisse, enthaltend ein Feststoff-Biozid (1) und ein Kompositmaterial (11) als Kombinationspräparat zur gleichzeitigen, getrennten oder zeitlich abgestuften Anwendung bei einer Sterilisierung und langfristigen Konservierung eines zu reinigenden Fluids (6), wobei das Kompositmaterial (11)
a) zur Absorption von Verunreinigungen geeignet ist und
b) ein Substrat (12)
c) und eingelagerte und/oder gebundene Metalle oder Metallverbindungen als Wirkstoffe (13.1, 13.2) umfasst,
**dadurch gekennzeichnet, dass**
d) das Substrat (12) des Kompositmaterials (11) als Hydrogel ausgebildet ist, wobei
e) das Kompositmaterial zur Freisetzung von Wirkstoffen (13.1, 13.2) ausgebildet ist, welche die Verunreinigungen reduzieren und/oder das Fluid (6) sterilisieren.

2. Erzeugnisse nach Anspruch 1, **dadurch gekennzeichnet, dass** die Wirkstoffe (13.1, 13.2) Ag umfassen.

3. Erzeugnisse nach Anspruch 2, **dadurch gekennzeichnet, dass** die Wirkstoffe (13.1, 13.2) zusätzlich Cu und/oder Zn umfassen.

4. Erzeugnisse nach einem der Ansprüche 1-3, **dadurch gekennzeichnet, dass** das Substrat (12) des Kompositmaterials (11) modifizierte Polysacharide enthält.

5. Erzeugnisse nach Anspruch 4, **dadurch gekennzeichnet, dass** das Substrat (12) des Kompositmaterials (11) zusätzlich acrylische Polymere und/oder Amine enthält.

6. Erzeugnisse nach einem der Ansprüche 1-5, **dadurch gekennzeichnet, dass** das Feststoff-Biozid (1) ein Substrat (2) und Metalle oder Metallverbindungen (3) umfasst, welche an der Oberfläche des Substrats und/oder oberflächennah angelagert und/oder gebundenen sind.

7. Erzeugnisse nach Anspruch 6, **dadurch gekennzeichnet, dass** das Substrat (2) des Feststoff-Biozids (1) Alginate enthält.

8. Erzeugnisse nach Anspruch 7, **dadurch gekennzeichnet, dass** das Substrat (2) des Feststoff-Biozids (1) zusätzlich Polyacrylamide und/oder Amine und/oder Aluminiumsilikate oder Zeolite enthält.

9. Erzeugnisse nach einem der Ansprüche 6-8, **dadurch gekennzeichnet, dass** als Metall oder in den Metallverbindungen (3) des Feststoff-Biozids (1) Ag enthalten ist.

10. Erzeugnisse nach Anspruch 9, **dadurch gekennzeichnet, dass** es sich um Ag-Komplexe handelt.

11. Erzeugnisse nach Anspruch 10, **dadurch gekennzeichnet, dass** es sich um Ag-Aminokomplexe handelt.

12. Erzeugnisse nach einem der Ansprüche 6-11, **dadurch gekennzeichnet, dass** das Substrat (2) des Feststoff-Biozids (1) als Hydrogel ausgebildet ist, welches quellfähig und/oder elastisch ist.

13. Erzeugnisse nach einem der Ansprüche 1-12, **dadurch gekennzeichnet, dass** das Feststoff-Biozid (1) und/oder das Kompositmaterial (11) in Form von Polyedern, Quadern, Platten, kugelförmigen Teilchen, als Granulat oder als Beschichtungen auf Trägermaterialien vorliegt.

14. Erzeugnisse nach Anspruch 13, **dadurch gekennzeichnet, dass** die kugelförmigen Teilchen oder einzelnen Körner des Granulats einen Durchmesser von 0.1-5 mm aufweisen.

15. Erzeugnisse nach Anspruch 13, **dadurch gekennzeichnet, dass** die kugelförmigen Teilchen oder einzelnen Körner des Granulats einen Durchmesser von 0.5-1.2 mm aufweisen.

16. Verfahren zur Reinigung eines Fluids mit Erzeugnissen nach einem der Ansprüche 1-15, **dadurch gekennzeichnet, dass** das zu reinigende Fluid (6) in einem ersten Verfahrensschritt mit dem Kompositmaterial (11) zur Absorption und Freisetzung von Wirkstoffen (13.1, 13.2) behandelt und in einem zweiten Verfahrensschritt mit dem oberflächenaktiven Feststoff-Biozid (1) versetzt wird.

17. Verfahren nach Anspruch 16, **dadurch gekennzeichnet, dass** das Feststoff-Biozid (1) so gewählt wird, dass bei einer Zugabe des Feststoff-Biozids (1) zum Fluid (6) keine chemischen Verbindungen, insbesondere keine Metalle oder Metallverbindungen, an das Fluid (6) abgegeben werden.

## Claims

1. Products comprising a solid biocide (1) and a composite material (11) as combination preparation for the simultaneous, separate or staggered application during a sterilization and long-term preservation of a fluid (6) to be purified, wherein the composite material (11)
a) is suitable for absorption of contaminants and
b) comprises a substrate (12)
c) and incorporated and/or bonded metals or metal compounds as active ingredients (13.1, 13.2),
**characterized in that**
d) the substrate (12) of the composite material (11) is configured as hydrogel, wherein
e) the composite material (11) is configured for release of active ingredients (13.1, 13.2), which reduce the contaminants and/or sterilize the fluid (6).

2. Products as claimed in claim 1, **characterized in that** the active ingredients (13.1, 13.2) comprise Ag.

3. Products as claimed in claim 2, **characterized in that** the active ingredients (13.1, 13.2) additionally comprise Cu and/or Zn.

4. Products as claimed in any of claims 1-3, **characterized in that** the substrate (12) of the composite material (11) comprises modified polysaccharides.

5. Products as claimed in claim 4, **characterized in that** the substrate (12) of the composite material (11) additionally comprises acrylic polymers and/or amines.

6. Products as claimed in any of claims 1-5, **characterized in that** the solid biocide (1) comprises a substrate (2) and metals or metal compounds (3) which are arranged on and/or bonded to the surface of the substrate and/or close to the surface.

7. Products as claimed in claim 6, **characterized in that** the substrate (2) of the solid biocide (1) comprises alginates.

8. Products as claimed in claim 7, **characterized in that** the substrate (2) of the solid biocide (1) additionally comprises polyacrylamides and/or amines and/or aluminum silicates or zeolites.

9. Products as claimed in either of claims 6-8, **characterized in that** Ag is included as metal or in the metal compounds (3) of the solid biocide (1).

10. Products as claimed in claim 9, **characterized in that** there are Ag complexes.

11. Products as claimed in claim 10, **characterized in that** there are Ag amino complexes.

12. Products as claimed in any of claims 6-11, **characterized in that** the substrate (2) of the solid biocide (1) is configured as hydrogel which is swellable and/or elastic.

13. Products as claimed in any of claims 1-12, **characterized in that** the solid biocide (1) and/or the composite material (11) is present in the form of polyhedra, cuboids, plates, spherical particles, as granulate or as coatings on carrier materials.

14. Products as claimed in claim 13, **characterized in that** the spherical particles or individual grains of the granulate have a diameter of 0.1-5 mm.

15. Products as claimed in claim 13, **characterized in that** the spherical particles or individual grains of the granulate have a diameter of 0.5-1.2 mm.

16. A process for purifying a fluid using products as claimed in any of claims 1-15, **characterized in that** the fluid (6) to be purified is treated, in a first process step, with the composite material (11) for absorption and release of active ingredients (13.1, 13.2), and, in a second process step, is treated with the surface-active solid biocide (1).

17. The process as claimed in claim 16, **characterized in that** the solid biocide (1) is selected such that, upon adding a solid biocide (1) to the fluid (6), no chemical compounds, in particular no metals or metal compounds, are released into the fluid (6).

## Revendications

1. Produits, contenant un biocide solide (1) et un matériau composite (11) sous la forme d'une préparation combinée, destinés à être utilisés simultanément, séparément ou d'une manière échelonnée dans le temps lors d'une stérilisation et d'une conservation à long terme d'un fluide à purifier (6), le matériau composite (11)
a) étant approprié pour l'absorption d'impuretés et
b) comprenant un substrat (12),
c) et des métaux ou des composés métalliques entreposés et/ou reliés en tant qu'agents actifs (13.1, 13.2),
**caractérisés en ce que**
d) le substrat (12) du matériau composite (11) est conçu sous la forme d'un hydrogel,
e) le matériau composite étant conçu pour la libération d'agents actifs (13.1, 13.2) qui réduisent les impuretés et/ou stérilisent le fluide (6).

2. Produits selon la revendication 1, **caractérisés en ce que** les agents actifs (13.1, 13.2) comprennent Ag.

3. Produits selon la revendication 2, **caractérisés en ce que** les agents actifs (13.1, 13.2) comprennent également Cu et/ou Zn.

4. Produits selon l'une quelconque des revendications 1 à 3, **caractérisés en ce que** le substrat (12) du matériau composite (11) contient des polysaccharides modifiés.

5. Produits selon la revendication 4, **caractérisés en ce que** le substrat (12) du matériau composite (11) contient également des polymères acryliques et/ou des amines.

6. Produits selon l'une quelconque des revendications 1 à 5, **caractérisés en ce que** le biocide solide (1) comprend un substrat (2) et des métaux ou des composés métalliques (3), qui sont fixés et/ou reliés sur la surface du substrat et/ou à proximité de la surface.

7. Produits selon la revendication 6, **caractérisés en ce que** le substrat (2) du biocide solide (1) contient des alginates.

8. Produits selon la revendication 7, **caractérisés en ce que** le substrat (2) du biocide solide (1) contient également des polyacrylamides et/ou des amines et/ou des silicates d'aluminium ou des zéolithes.

9. Produits selon l'une quelconque des revendications 6 à 8, **caractérisés en ce qu'**Ag est contenu en tant que métal ou dans les composés métalliques (3) du biocide solide (1).

10. Produits selon la revendication 9, **caractérisés en ce qu'**il s'agit de complexes d'Ag.

11. Produits selon la revendication 10, **caractérisés en ce qu'**il s'agit de complexes Ag-amino.

12. Produits selon l'une quelconque des revendications 6 à 11, **caractérisés en ce que** le substrat (2) du biocide solide (1) est conçu sous la forme d'un hydrogel, qui est gonflant et/ou élastique.

13. Produits selon l'une quelconque des revendications 1 à 12, caractérisés en ce le biocide solide (1) et/ou le matériau composite (11) se présentent sous la forme de polyèdres, de parallélépipèdes rectangles, de plaques, de particules sphériques, sous la forme d'un granulat ou sous la forme de revêtements sur des matériaux supports.

14. Produits selon la revendication 13, **caractérisés en ce que** les particules sphériques ou les grains individuels du granulat présentent un diamètre de 0,1 à 5 mm.

15. Produits selon la revendication 13, **caractérisés en ce que** les particules sphériques ou les grains individuels du granulat présentent un diamètre de 0,5 à 1,2 mm.

16. Procédé de purification d'un fluide avec des produits selon l'une quelconque des revendications 1 à 15, **caractérisé en ce que** le fluide à purifier (6) est traité lors d'une première étape de procédé avec le matériau composite (11) pour l'absorption et la libération d'agents actifs (13.1, 13.2) et mélangé lors d'une seconde étape de procédé avec le biocide solide tensioactif (1).

17. Procédé selon la revendication 16, **caractérisé en ce que** le biocide solide (1) est choisi de manière à ce qu'aucun composé chimique, notamment aucun métal ou composé métallique, ne soit libéré dans le fluide (6) lors d'un ajout du biocide solide (1) au fluide (6).
